Europäisches Patentamt

European Patent Office

Office européen des brevets

(19)

(11) **EP 1 217 763 A2**

(12) **EUROPEAN PATENT APPLICATION**

(43) Date of publication:
26.06.2002 Bulletin 2002/26

(51) Int Cl.⁷: **H04B 7/185**

(21) Application number: **01310553.1**

(22) Date of filing: **18.12.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **20.12.2000 US 256736 P
07.12.2001 US 7978**

(71) Applicant: **Hughes Electronics Corporation
El Segundo, California 90245 (US)**

(72) Inventors:
• **Poulton, Matthew
Concord, North Carolina 28027 (US)**

• **Su, Wansheng
Gaithersburg, Maryland 20878 (US)**
• **Ditzler, Keith
Littlestown, Pennsylvania 17340 (US)**
• **Jackson, Thomas
Frederick, Maryland 21702 (US)**
• **Burkhari, Nadeem
Germantown, Maryland 20874 (US)**

(74) Representative: **Jackson, Richard Eric et al
Carpmaels & Ransford,
43 Bloomsbury Square
London WC1A 2RA (GB)**

(54) **Apparatus for providing variable control of the gain of an RF amplifier**

(57)    A method and apparatus for providing remote control of the output power level of an amplifier. The method uses pulse width or pulse density modulated signal proportional to the power level of the amplifier. This signal is detected and filtered to provide a control voltage to the apparatus mentioned below. The apparatus includes an amplifier, and a comparator having a first input coupled to an output terminal of the amplifier, a second input coupled to a control signal, and an output terminal coupled to an input terminal of the amplifier.

The amplifier and comparator operate to form a feedback loop which functions to equalize the voltage level of an output signal present at the output terminal of the amplifier to the voltage level of the control signal. The equalization of the voltage level of the output signal of the amplifier to the voltage level of the control signal is effected by adjusting the drain current flowing through the amplifier. Accordingly, by varying the voltage level of the control signal, the power level of the output signal of the amplifier can be varied.

FIG. 2A

EP 1 217 763 A2

## Description

## BACKGROUND OF THE INVENTION

Satellite communication systems typically have employed large aperture antennas and high power transmitters for establishing an uplink to the satellite. Recently, however, very small aperture antenna ground terminals, referred to as remote ground terminals, have been developed for data transmission. In such systems, the remote ground terminals, also known as VSATs, are utilized for communicating via a satellite from a remote location to a central hub station. The VSATs can be used to communicate data, voice and video, to or from a remote site to a central hub. Typically, the VSAT terminals have a small aperture directional antenna for receiving from or transmitting signals to the satellite, and an outdoor unit (ODU) mounted near the antenna for transmitting a modulated carrier generated by an indoor unit (IDU).

In such VSAT systems, one of the most critical operating characteristics is the output power level of the RF amplifier contained in the ODU. The output power level must be sufficiently high such that the uplink signal can be properly received by the satellite. Moreover, as adverse weather conditions can negatively effect the signal-to-noise ratio of the uplink signal, the output power level of the RF amplifier must be high enough so as to allow receipt of the uplink signal under adverse weather conditions, even though reduced power levels would be acceptable during clear weather conditions. However, as a competing interest, it is also desirable to maintain the output power level of the RF amplifier as low as possible so as to minimize operating costs.

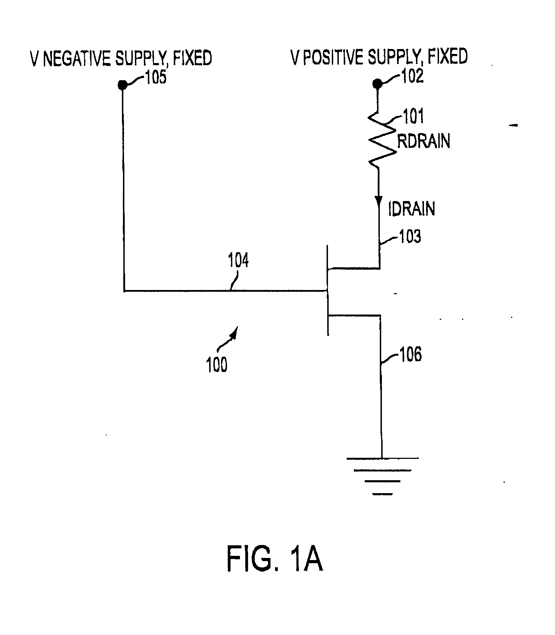

Currently, known RF amplifiers utilized in VSAT systems are typically power controlled using one of the following two methods. This first method is by selection of the resistors biasing the RF amplifier, which are predetermined during the manufacturing process, and non-variable after selection. Fig. 1a illustrates a typically prior art system which utilizes the first method. As shown, the system includes an amplifier 100, which is a FET, having a fixed positive power supply 102 coupled to a drain terminal 103 of the amplifier via a fixed resistor 101. The gate terminal 104 of the amplifier 100 is coupled to a fixed negative voltage power supply 105, and the source terminal 106 of the amplifier 100 is coupled to ground. As is known, the output power level of the amplifier 100 can be controlled by limiting the drain current by means of the fixed series resistor 101, thereby controlling the saturation point of the amplifier 100.

Accordingly, increasing the value of the series resistor 101 operates to reduce the output power level of the amplifier 100, while decreasing the value of the series resistor 101 operates to increase the output power level of the amplifier 100. It is noted, however, that once the series resistor is selected during the manufacturing process, it cannot be easily changed. As such, the gain or power output of the RF amplifier must be set so as to allow for acceptable operation under adverse weather conditions. In other words, under non-adverse or clear weather conditions, the output of the RF amplifier is operating above the minimal acceptable power level, and therefore needlessly increasing operating costs.

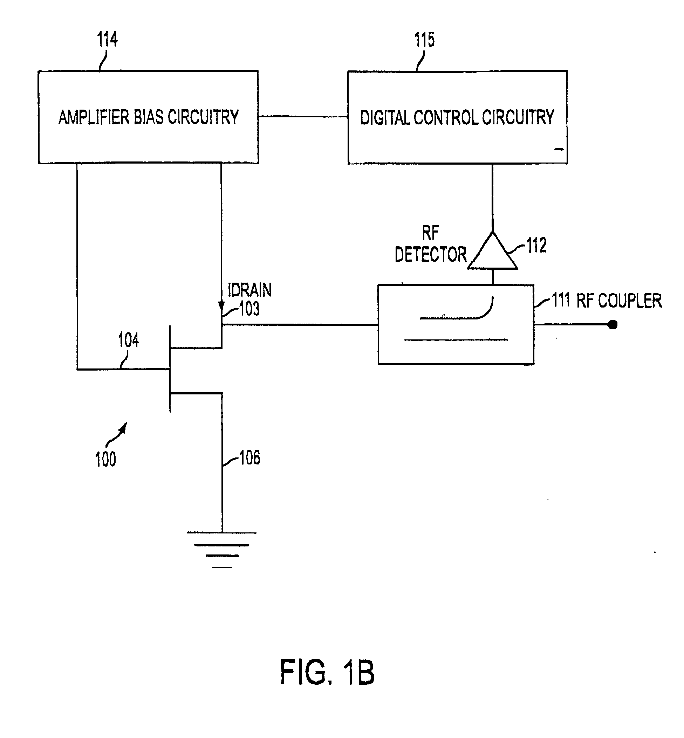

The second method entails sensing the RF output of the amplifier 100, comparing the output power level to a calibration table and then adjusting the bias of the amplifier. Fig. 1b illustrates a typically prior art system which utilizes the second method. The system includes an amplifier 100, which is a FET, amplifier bias circuitry 114, digital control circuitry 115, an RF power coupler 111 and a detector 112. As shown, the drain terminal 103 and gate terminal 104 of the amplifier 100 are connected to the amplifier bias circuitry 114. The output of the amplifier 100 is connected to the RF power coupler 111 and detector 112. The detector output 112 is compared by the digital control circuitry 115 to calibrated output data and the amplifier bias circuitry 114 is adjusted to compensate the RF amplifier 100 so as to maintain a set output power level,

Notwithstanding the ability of the second method to dynamically adjust the output power level during operation, the method stills exhibits the following shortcomings.

One main shortcoming is that the prior art techniques require extensive calibration procedures in order to ensure proper operation. For example, the prior art system of Fig. 1b requires determination of the operation of the device over numerous power levels and numerous frequencies. This data, which represents the calibration data, is then stored in memory and recalled during operation for adjustment of the amplifier. It is further noted that such calibration procedures must be performed on a device by device basis. Depending on the range of operation, such extensive calibration requirements can be both time consuming and costly.

Accordingly, there exists the need for a means to control an RF amplifier utilized in a VSAT system such that the output power level (or gain) is continuously adjustable when the amplifier is operating, and which allows for the control mechanism for varying the output power of the RF amplifier to be contained in the IDU so as to allow the operator to easily vary the output power without having to access the ODU.

In addition, there is also a need for a control mechanism for adjusting the output power of the amplifier which is simple and inexpensive such that the implementation/utilization of the circuit in the VSAT system does not become prohibitive, and which does not result in the need for extensive calibration procedures.

## SUMMARY OF THE INVENTION

The present invention relates to the method and apparatus for providing active control of an RF amplifier during operation. In particular, the present invention relates the method and apparatus for providing active control of the output power level of an RF amplifier contained in an ODU of a VSAT, where the control mechanism for effecting control of the RF amplifier is accessible via the IDU.

In accordance with the present invention, a power control signal is generated by a signal generating circuit contained in the IDU. The power control signal is then coupled to the ODU via an interfacility link. In one embodiment, the signal generating circuit functions to generate a pulse width modulated (PWM) or pulse density modulated (PDM) signal, where the pulse width (or the pulse density) is proportional to the required output power level of the ODU. The ODU detects and filters the power control signal, and provides a control voltage to an RF amplifier bias circuit, which operates to determine the gain and the saturated power output capability of the RF amplifier. The control signal generated by the detection circuitry of the ODU is also proportional to the PWM/PDM duty cycle of the power control signal, and therefore proportional to the power level required of the RF amplifier as set by the IDU.

In one exemplary embodiment, the outdoor unit comprises an amplifier, and control circuitry coupled to the amplifier, which functions to vary the output power level of the amplifier in accordance with the control signal output by the detection circuitry. The control circuitry comprises a comparator having a first input coupled to an output terminal of the amplifier, a second input coupled to a control signal, and an output terminal coupled to an input terminal of the amplifier. The amplifier and the comparator form a feedback loop which operates to equalize the voltage level of an output signal present at the output terminal of the amplifier to the corresponding level of the power control signal. The output signal present at the output terminal of the amplifier corresponds to the variable output power signal. Importantly, in accordance with the present invention, the output amplifier operates in a saturated mode, and changes In the output power level of the amplifier are effected by changing the operating bias point of the amplifier. In other words, power control of the saturated amplifier is obtained by changing the operating bias point, thereby changing the maximum saturated current level of the amplifier. Any such change in the maximum saturated current level of the amplifier results in a corresponding change in the output power level.

As described below, the method and apparatus for providing active control of an amplifier in accordance with the present invention provides important advantages over the prior art. Most importantly, the present invention allows for a low cost simple analog circuit approach to be utilized in the ODU rather than a complicated and more expensive digital solution using a microprocessor, a Universal Asynchronous Receive Transmit (UART) block and memory.

In addition, by allowing the output of the amplifier to be continuously varied by the operator via the IDU, the overall system operates with increased efficiency, as the amplifier can be continuously adjusted to operate slightly above the minimal requirement necessary for proper operation. Furthermore, the RF amplifier follows a predictable relationship between DC bias and RF output power, giving the benefit of requiring no calibration during or after manufacture and allowing open loop operation after initial setup.

Specifically, once the VSAT system utilizing the present invention is initially calibrated to determine the necessary current level corresponding to the desired maximum power level to be generated by the amplifier during operation, it is easily determined how to reduce the current (voltage) supplied to the amplifier to obtain the desired output power level. No additional calibration procedures (e.g., at the reduced power levels) are necessary. This is due to the fact that the amplifier of the present invention is always operating in the saturated mode, which results in proportional variations between input current (voltage) and output power. As explained below, changes in the output power levels of the amplifier are obtained by changing the operating bias point of the amplifier.

The invention itself, together with further objects and attendant advantages, will best be understood by reference to the following detailed description, taken in conjunction with the accompanying drawings.

## BRIEF DESCRIPTION OF THE DRAWINGS

Fig. 1(a) is a diagram of a prior art amplifier, which has the output power level set by means of a fixed series resistor.

Fig. 1(b) is a diagram of a prior art amplifier, using an RF feedback system to detect and control the output level of an amplifier.

Fig. 2(a) is a block diagram of an exemplary embodiment of the present invention utilized in a VSAT system for providing active control of an amplifier in accordance with the present invention.

Fig. 2(b) is a block diagram of an exemplary signal generating circuit contained in the IDU.

Fig. 3(a) is an exemplary circuit diagram of a first embodiment of control circuitry for providing active control of an amplifier in accordance with the present invention.

Fig. 3(b) illustrates exemplary waveforms associated with the operation of the device of Fig. 3(a).

Fig. 4(a) is an exemplary circuit diagram of a second embodiment of control circuitry for providing active control of an amplifier in accordance with the present invention.

Fig. 4(b) illustrates exemplary DC bias variation associated with the operation of the device of Fig. 4(a).

Fig. 5(a) is an exemplary circuit diagram of the control circuitry for providing active control of Vdrain of an amplifier in accordance with the operation of the device of Figure 4(a).

Fig. 5(b) illustrates exemplary DC bias variation associated with the operation of the device of Fig. 5(a).

Fig. 6(a) is an exemplary circuit diagram of alternative control circuitry for providing active control of Vdrain of an amplifier in accordance with the operation of the device of Figure 4(a).

Fig. 6(b) illustrates exemplary waveforms associated with the operation of the device of Fig. 6(a).

Fig. 7 is a load-line diagram illustrating the operation of the device illustrated in Fig. 3.

Fig. 8 is a load-line diagram illustrating the operation of the device illustrated in Fig. 4.

Fig. 9 is an exemplary embodiment of a VSAT system incorporating the present invention.

## DETAILED DESCRIPTION OF THE DRAWINGS

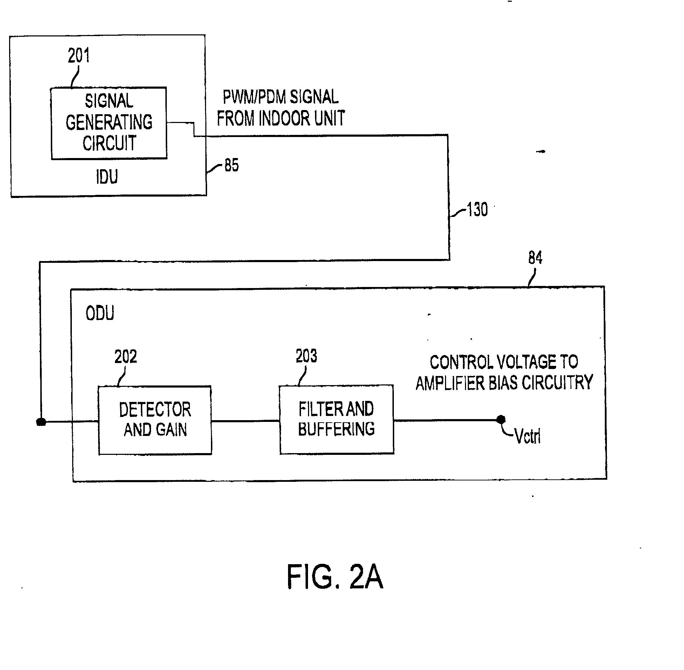

Fig. 2(a) is a block diagram of an exemplary system in accordance with the present invention, which allows for active control of an output amplifier located in an Outdoor Unit (ODU) by means of a control signal generated in an Indoor Unit (IDU). Referring to Fig. 2(a), the system comprises an IDU 85, which includes a signal generating circuit 201 utilized to generate the power control signal; an Interfacility link (IFL) cable 130 that connects the IDU to an ODU 84. The ODU 84 comprises a detection and gain circuit 202 and a filter and buffering circuit 203, which as explained in more detail below, function to detect and process the power control signal forwarded by the IDU 85 so as to provide a control voltage to an apparatus (not shown in Fig. 2(a)) utilized to vary the RF amplifier bias.

In the preferred embodiment of the present invention, the power control signal generated by the IDU 85 is a pulse width modulated (PWM) or pulse density modulated signal (PDM). As explained in more detail below, the duty cycle of the modulated signal is variable (under operator control) and is proportional to the required output power level of the RF amplifier. As stated, the power control signal is coupled to the detection and gain circuit 202 of the ODU 84. In the given embodiment, the detection and gain circuit 202 functions to produce a constant voltage signal having a level which corresponds to the duty cycle of the power control signal. In other words, as the duty cycle of the power control signal is varied, so is the voltage level of the signal output by the detection and gain circuit 202. Thus, the voltage signal output by the detection and gain circuit 202 comprises a voltage signal which varies between fixed limits proportional to the duty cycle of the power control signal. The output of the detection and gain circuit 202 is then coupled to the filtering and buffering circuit 203, which functions to filter/convert the signal output by the detection and gain circuit 202 so as to make the signal compatible with the bias circuitry utilized to alter the amplifier bias of the output amplifier of the ODU. The output of the filtering and buffering circuit 203 corresponds to control signal Vctrl (or Vctrl1 and Vctrl2). It is noted that it may be possible to omit the filtering and buffering circuit 203, assuming the output of the detection and gain circuit 202 is compatible with the RF amplifier biasing circuitry.

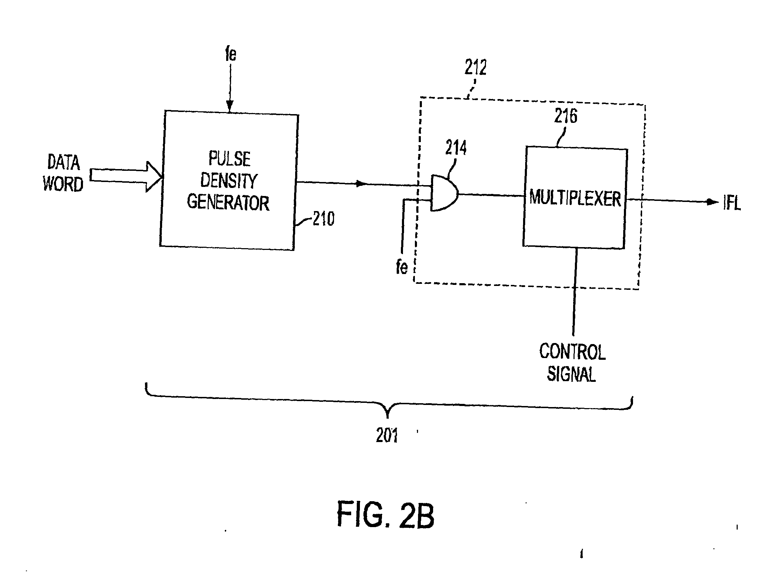

Fig. 2(b) is a block diagram of an exemplary signal generating circuit 201 contained in the IDU 85. In the given embodiment, the signal generating circuit comprises a pulse density generator 210, which receives the following input signals: (1) a data word, which corresponds to the desired output power level of the amplifier, and (2) a clock signal, fc. The signal generating circuit further comprises a modulator 212, which includes in the given example, an AND gate 214 and a multiplexer 216. The operation of the signal generating circuit 201 is as follows.

First, a data word corresponding to the desired output power level of the amplifier is input into the pulse density generator 210. It is noted that the data word is defined by the operator and is variable under operator control. Upon receipt of the data word, the pulse density generator 210, which can be, for example, a sigma-delta modulator comprising an accumulator, generates an output signal having a pulse duration corresponding to the value of the data word. More specifically, assuming the sigma-delta modulator contained in the accumulator has a size equal to N, the output signal of the sigma-delta modulator comprises pulses having a density equal to (the value of the data word)/N. For example, if the data word input into the sigma-delta modulator equals 5 and N equals 10, for a cycle corresponding to the data size of 10, the output of the sigma-delta modulator will be "high" for half the cycle. If the data word is increased to "7", the output of the sigma-delta modulator will be "high" for 7/10 of the cycle. Similarly, if the data word is reduced to 1, the output of the sigma-delta modulator will "high" for 1/10 of the cycle. Accordingly, by simply adjusting the value of the data word input to the sigma-delta modulator, it is possible to adjust the pulse density of the output signal over a given cycle. It is noted that sigma-delta modulators are well known in the art and are therefore not described in further detail herein.

The output of the sigma-delta generator is coupled to the modulator 212. More specifically, the output signal of the sigma-delta generator is coupled to the AND gate 214 which functions to gate the output signal in accordance with the carrier frequency, fc. The output of the AND gate 214 is then coupled to the multiplexer 216, which functions to place the pulse density modulated signal (PDM) output by the sigma-delta modulator onto the IFL 130.

To summarize, the PDM signal output by the modulator 212 has a pulse density (i.e., duty cycle) which varies proportionally with variations in the data word input to the pulse density generator 210. As explained in further detail below, upon receipt of the PDM signal, the ODU, in one embodiment, detects and filters the PDM signal, for example, utilizing a low-pass filter so as to generate a power control signal having a voltage level which varies proportionally with variations in the pulse density of the PDM signal. The power control signal is then utilized to control the power output level of the amplifier, as explained in more detail below.

It is noted that circuits and techniques for generating the PWM signal or the PDM signal are well known. The foregoing embodiment is intended to be exemplary in nature, and in no way limiting. Clearly, other methods of generating a PDM signal or a PWM signal exist, and can be utilized in conjunction with the present invention.

Similarly, circuits for receiving and demodulating a PDM signal so as to output a voltage level corresponding to the duty cycle are also well known. Any such circuit can be utilized for the detection and gain circuit 202 of the ODU 84. As stated, the output of the detection and gain circuit 202 is a voltage (or current) signal having an amplitude (or value) which varies proportionally with variations in the data word input into the signal generating circuit 201.

Finally, the design of the filtering and buffering circuit 203 will vary in accordance with variables, such as, the type of logic utilized in a given design, the design of the RF amplifier, etc. However, the filtering and buffering requirements of a given design will be readily apparent to one of skill in the art upon selection of the other IDU and ODU components. In addition, it is further noted that other modulation schemes for modulating the power control signal so as to indicate the desired amplifier output level are possible. The PWM and PDM schemes disclosed herein are intended to be illustrative and not limiting.

It is further noted that the variable control method/device of the present invention can operate in any one of several different modes. For example, the IDU 85 can be programmed to set RF amplifier output power level during system set up so as to maintain the most efficient power consumption usage of the RF amplifier, based for example on location of the terminal (i. e., ODU). An alternate example allows constant variation of the RF amplifier output power level based on feedback to the IDU from a received signal from a satellite or other sources (e.g., a phone line).

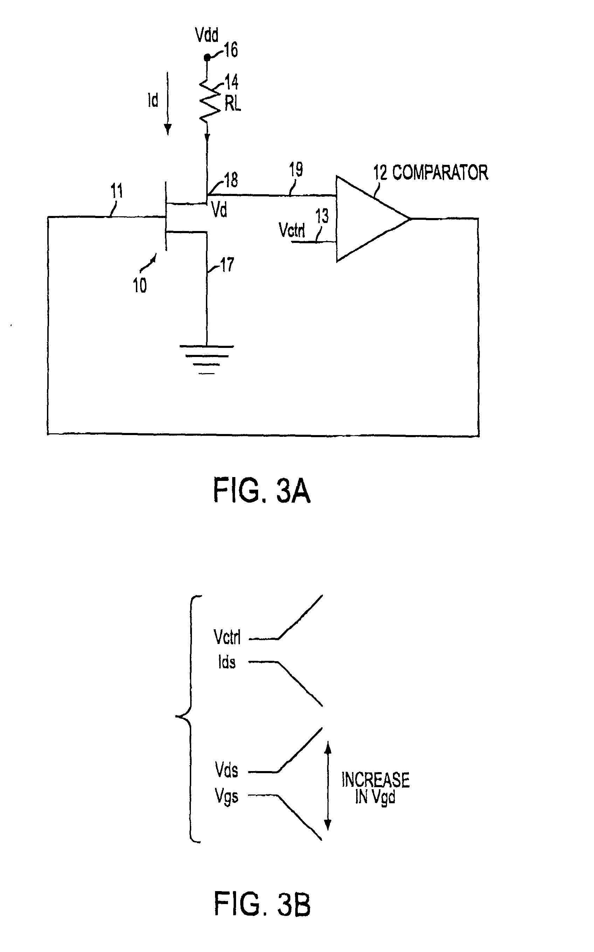

Fig. 3(a) is an exemplary circuit diagram of a first embodiment of the control circuitry for providing active control of an amplifier in accordance with the present invention. The control circuitry, which is coupled to an amplifier 10 (e.g., a field-effect transistor (FET)) comprises a comparator 12, a series resistor 14 and a voltage source 16 (Vdd).

As shown in Fig. 3(a), the amplifier 10 has a source terminal 17 coupled to ground potential, a drain terminal 18 coupled to a first input 19 of the comparator 12 and to one end of the series resistor 14, and a gate terminal 11 which is coupled to an output of the comparator 12. The other end of the bias resistor 14 is coupled to the supply voltage 16, Vdd. The comparator 12 comprises a second input 13, which is coupled to a voltage control signal line. In the given embodiment, the second input 13 is coupled to the output of the filtering and buffering circuit 203. It is noted that while not shown in Fig. 3(a), additional feedback/bias circuitry would be coupled, for example, to the comparator 12. However, as the use of such circuitry would be known by those of skill in the art, and would vary from application to application in accordance with design variables, such as, desired bandwidth, desired range of frequency operation, etc., particulars regarding such feedback/bias circuitry has been omitted from the specification to facilitate understanding of the present invention. It is further noted that when the present invention is utilized In a VSAT system, in the preferred embodiment, all of the components illustrated in Fig. 3(a) are contained in the ODU 84. However, as mentioned above, the means for controlling and/or varying the voltage level of control signal, Vctrl, originates in the IDU 85, such that it can be controlled and varied without having to access the ODU 84.

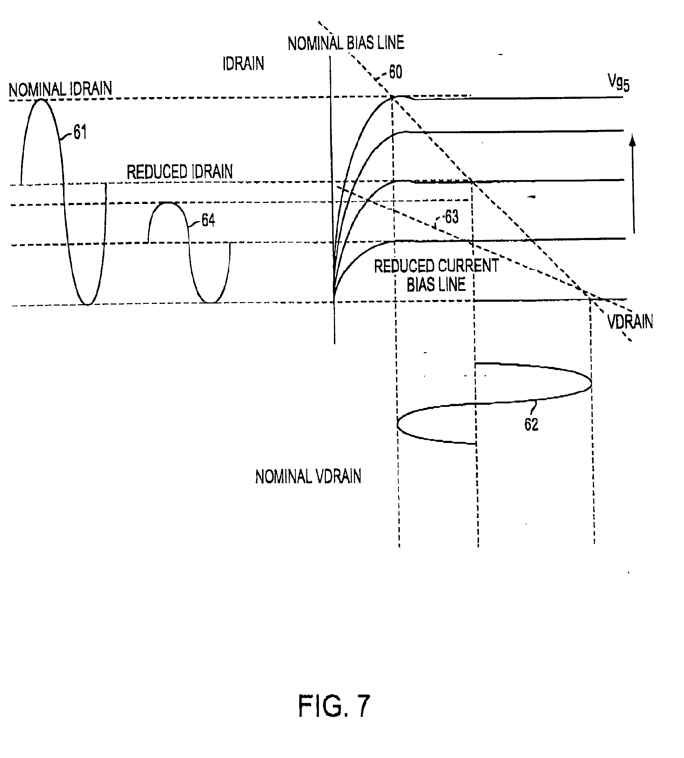

The operation of the device illustrated in Fig. 3 (a) in now described in conjunction with the exemplary load lines illustrated in Fig. 7. In the circuit illustrated in Fig. 3(a), the comparator 12 and the amplifier 10 form a feedback loop. As shown, and set forth above, the comparator 12 comprises two inputs 13, 19. The first input 19 is coupled to the drain terminal 18 of the amplifier 10. The second input 13 is coupled to a control signal, Vctrl, which is generated by the filtering and buffering circuit 203 of the ODU 84. As noted above, Vctrl is directly proportional to the duty cycle of the power control signal generated by the IDU 85. The comparator 12, which is typically an operational amplifier, operates to continually adjust its output voltage level until the voltage levels of the signals received at the inputs 13, 19 of the comparator 12 are equal. In other words, as described in more detail below, the comparator 12 will continually adjust its output voltage level, which corresponds to the gate voltage, Vg, of the amplifier 10, until the drain voltage, Vd, of the amplifier 10 equals the voltage of the control signal, Vctrl.

As a result, if it is desired to reduce the output power level of the amplifier 10, the voltage level of control signal, Vctrl, is increased, which results in an increase in the drain voltage, Vd, thereby resulting in a decrease in the voltage drop across resistor, RI, and a corresponding reduction in the drain current, Id. Accordingly, if the supply voltage 16 remains constant, a reduction in the drain current, Id, reduces the output power of the amplifier 10. Of course, the opposite is also true, namely, a reduction in the control signal, Vctrl, would result in a decrease in Vd, and a corresponding increase in drain current, Id, thereby resulting in an increase in the output power of the amplifier 10.

Thus, the present invention allows for continuous, analog control of the output power level of the amplifier 10 simply by adjusting the voltage level of control signal, Vctrl, which in the current embodiment is accomplished by adjusting the duty cycle of the power control signal generated by the IDU 85. It is also noted that the maximum output power levels are determined by the saturation characteristics of the selected amplifier 10.

It is further noted that Fig. 3(a) only illustrates the DC bias configuration of the RF amplifier. This bias circuitry is decoupled from the RF amplifier at RF frequencies using an RF choke and decoupling capacitors or equivalent microstrip configurations and using DC blocking capacitors at the input and output of the amplifier so as to allow the RF signal to be AC coupled in and out of the RF amplifier.

Turning again to the device of Fig. 3(a), it is noted that the value of the current, Id, is governed by the following equations:

$$Id = gmVgs \qquad (1),$$

and

$$Id = (Vdd - Vd)/R1 \qquad (2)$$

where gm equals the transconductance parameter of the amplifier. Given the foregoing equations, it can be readily shown that the gate-source voltage, Vgs, of the amplifier 10 and the source-to-drain voltage, Vds, move in opposite directions of one another in the device of Fig. 3(a). In other words, as Vds increases (goes more positive), Vgs decreases (more negative), and vise versa. Fig. 3(b) illustrates the relationships between signals, Vctrl, Id, Vds and Vgs. To summarize, as Vctrl increases, Vds also increases, while Id and Vgs decrease. Of course, the opposite is also true, if Vctrl is decreased, Vds decreases, while Id and Vgs increase (i.e., less negative, but not greater than 0 volts).

Fig. 7, which illustrates an exemplary load line associated with the device of Fig. 3(a), is helpful in understanding the operation of the given embodiment of the present invention. As stated above, the output power level of the device of Fig. 3(a) is adjustable in an continuous/analog manner by varying the voltage level of the control signal, Vctrl. Referring to Fig. 7, load line 60 is an exemplary representation of a load line corresponding to the maximum allowable output of amplifier 10, and is referred to as the nominal bias line. As is known, load line 60 is determined in-part in accordance with the value of Vdd coupled to the resistor 14, RI. As is also known, the maximum value of Id varies in accordance with the value of Vgs. As shown in Fig. 7, as Vgs increases, the maximum value of Id also increases (i.e., the saturation level), resulting in an increase in the voltage drop across RI and an increase in the output power of the amplifier 10. The value of Id corresponding to load line 60 is illustrated as waveform 61 in Fig. 7. It is noted that Vd also has a nominal value corresponding to load line 60, which is depicted as waveform 62 in Fig. 7.

Alternatively, as Vgs decreases, the maximum value of Id also decreases, thereby reducing the output power of the amplifier 10. As shown in Fig. 7, a reduction in Vgs results in a reduction of the saturation current level of the amplifier 10, and therefore a reduction in the maximum allowable value of Id. In other words, a reduction in Vgs generates a new load line 63 having a different slope from the nominal load line 60. Referring to waveform 64, it is shown that the reduction in Vgs results in a corresponding reduction in the maximum available drain current, Id, and therefore a reduction in the output power of the amplifier 10. It is further noted that the voltage waveform 62 remains unchanged in the current embodiment.

Accordingly, by use of the feedback loop formed by the comparator 12 and the amplifier 10 it is possible to precisely and continuously control/vary the output power level of the amplifier 10 by simply varying the voltage level of signal, Vctrl. More specifically, in the event it was desirable to lower the output power of the device, assuming that the waveform 61 of Fig. 7 represented the current state of the device, the control voltage signal, Vctrl, would be increased, which causes a corresponding decrease in Vgs and a corresponding increase in Vd, as a result of the feedback loop which operates to make Vctrl and Vd equal to one another. As a result of the increase in voltage, Vd, the drain current Id decreases. The output power is proportional to $Id^2$ at the output at RF frequencies. Therefore, if Id decreases while Vd remains approximately constant the output power of the amplifier is reduced.

Alternatively, if it is desired to raise the output power of the device, the voltage level of Vcrtl is decreased, which causes a corresponding increase (i.e., less negative) in Vgs and a corresponding decrease in Vd, as the feedback loop operates to make Vctrl and Vd equal to one another. As a result of the decrease in voltage, Vd, the drain current, Id, increases. The output power is proportional to $Id^2$ at the output at RF frequencies. Therefore if Id increases while Vd remains approximately constant the output power of the amplifier is increased.

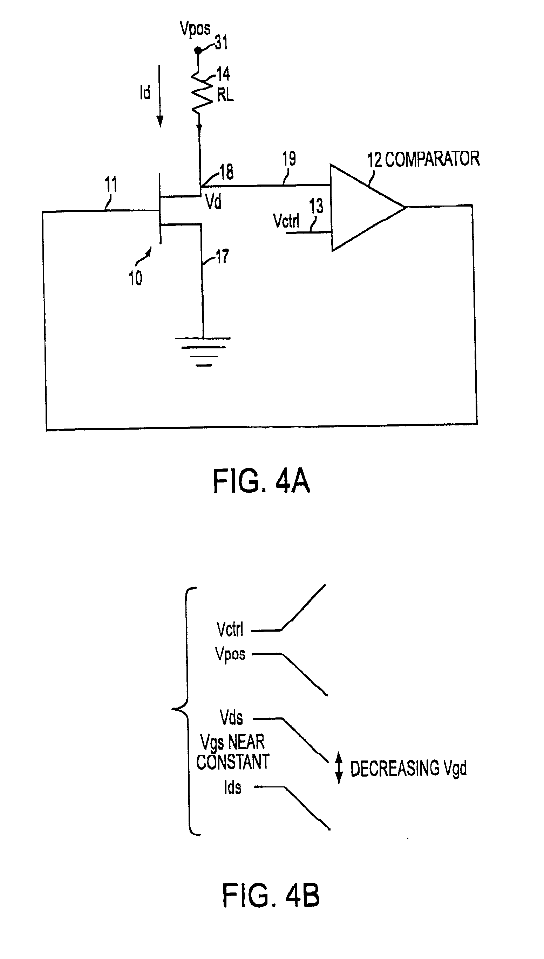

Fig. 4(a) illustrates a second embodiment of the control circuitry for providing active control of the amplifier in accordance with the present invention. The control circuitry of the second embodiment is identical to the first embodiment shown in Fig. 3(a) in all respects except that a variable voltage supply 31 replaces the fixed power supply 16 coupled to the resistor 14. As such, in the current embodiment, the supply voltage 31 coupled to the resistor 14 is also variable under user control. By varying the supply voltage 31, it is also possible to vary the voltage, Vd, at the drain terminal 18 of the amplifier 10, thereby allowing a desired increase or decrease in drain current, Id, and the corresponding increase or decrease in the output power of the amplifier 10.

Referring to Fig. 4(b), it can be readily shown that in the event it is desirable to lower the power output of the amplifier 10, the control voltage signal, Vctrl, would be increased and the variable supply voltage 31, would be decreased. As a result, both the drain current, Id, and the drain voltage, Vd, are reduced, and Vgs remains essentially constant, as shown in Fig. 4(b). Thus, there is a reduction in the output power of the amplifier 10. Alternatively, if it is desired to raise the output power of the amplifier 10, the voltage level of Vctrl is decreased and the variable supply voltage 31 is increased, which causes a corresponding increase in drain current, Id, and drain voltage, Vd, and therefore an increase in the output power of the amplifier 10. Once again, Vgs remains substantially constant.

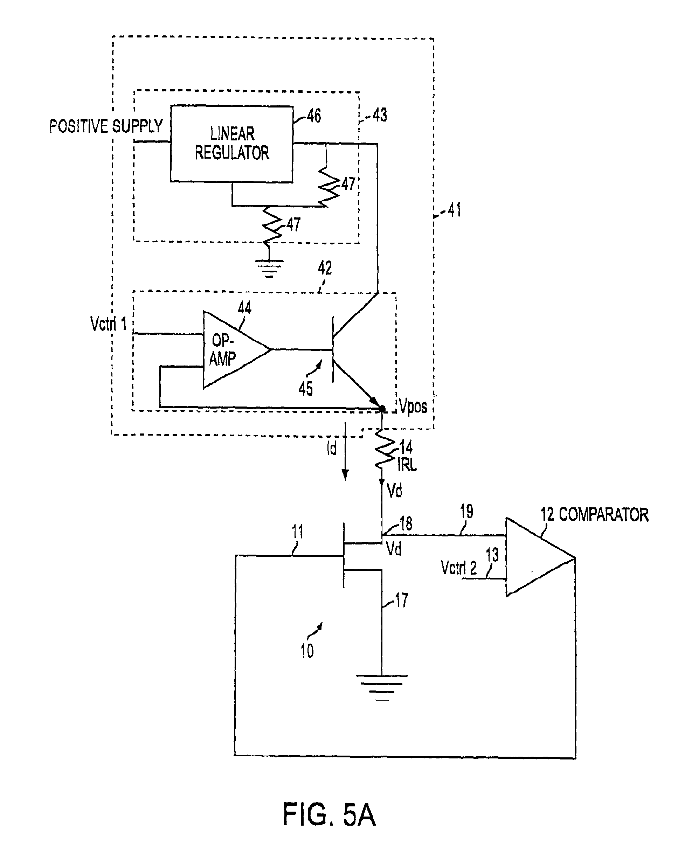

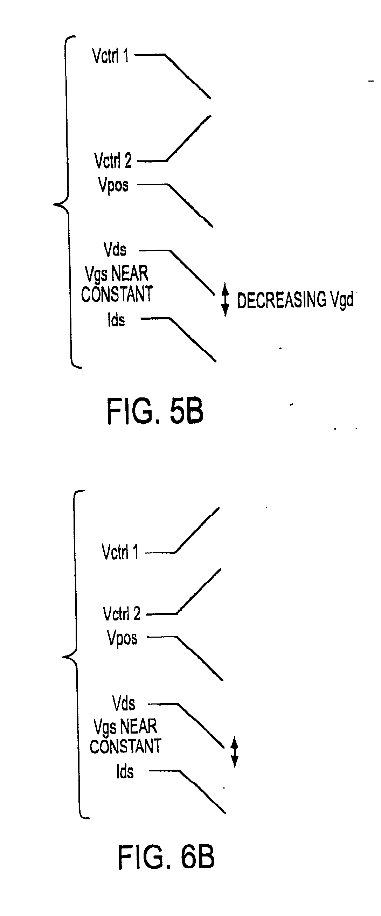

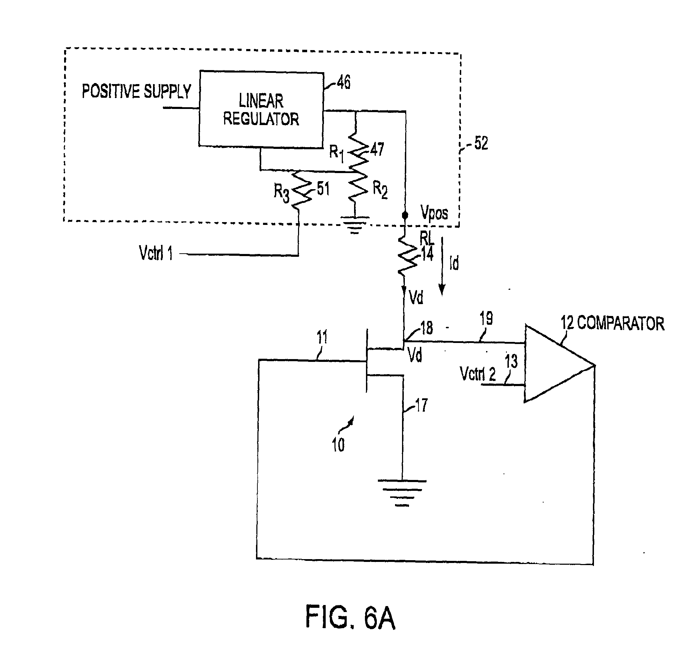

As stated, the circuit of Fig. 4b utilizes another variable control voltage signal, Vpos, which is also proportional to the duty cycle of the power control signal generated by the IDU. Examples of circuitry used to control/vary Vdd are set forth in Fig. 5 and Fig 6. As explained in more detail below, the embodiment of Fig 5 utilizes the voltage control signal Vctrl1 through a follower circuit after a linear regulator to vary Vdd. It is noted that the voltage control signal Vctrl2 corresponds to signal Vctrl of Figs. 3 and 4. The embodiment of Fig. 6 utilizes the signal Vctrl1 to directly alter the linear regulator output by adjusting the feedback input to the linear regulator. In one embodiment, Vpos is generated in the IDU in the same manner as the power control signal described above.

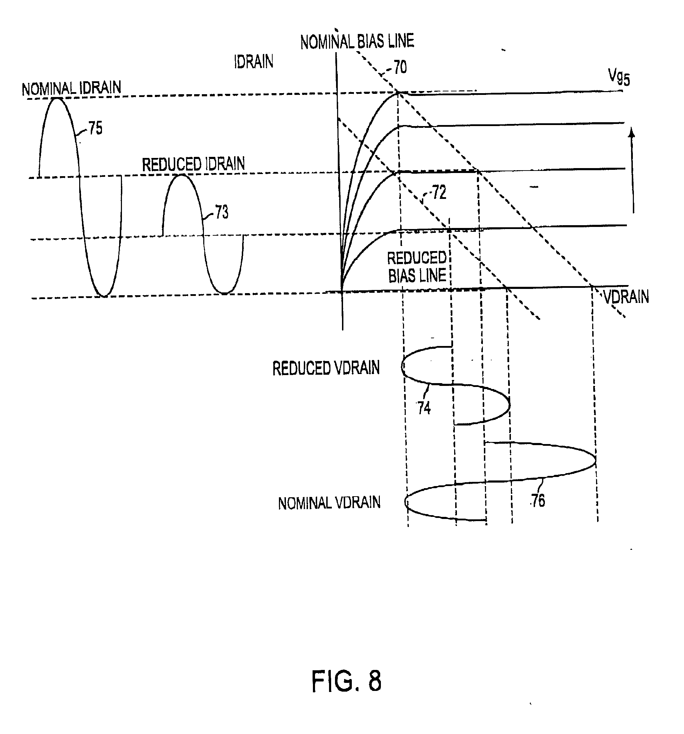

Referring to Fig. 8, which illustrates an exemplary load line associated with the device of Fig. 4(a), it is shown that by allowing a reduction in both the drain current, Id, and the drain voltage, Vd, the original load line 70 is shifted, but the slope of the load line remains constant. The shifted load line is represented by element 72 in Fig. 8. The reduction in drain current, Id, and drain voltage, Vd, which causes the shift in the load line, results in a reduction in the maximum available drain current signal 73 and drain voltage signal 74, in comparison to the nominal values of the drain current signal 75 and the drain voltage signal 76. As such, the output power of the amplifier 10 is reduced.

In addition, as also shown in Fig. 8, the embodiment of Fig. 4(a) provides the additional advantage of moving the bias point of the amplifier 10 away from the device breakdown point as the saturation point is reduced, as well as allowing RF amplifiers with stabilization resistors on the device gate to be power controlled. This is particularly important as some RF amplifier manufacturers use gate stabilization resistors to limit the range of gate voltage applied to the FET. In this situation the device shown in the first embodiment of the present invention, which controls the gate voltage only, an RF amplifier with a gate stabilization resistor may be intolerant to the voltage variation from the bias circuit at the gate, and hence only a limited variation of Id and hence output power could be achieved. The second embodiment using the drain voltage control allows Id to be varied sufficiently to allow output power to vary correctly even in the presence of a gate stabilization resistor on the RF amplifier.

As stated previously, Fig. 5(a) illustrates an example of how Vdd may be varied for the present invention shown in Fig. 4(a). In particular, the embodiment of Fig. 5(a) illustrates a first exemplary circuit for controlling variations in the supply voltage 31 coupled to the load resistor, Rl. Referring to Fig. 5(a), the circuit comprises the same components as the first embodiment of the present invention illustrated in Fig. 3(a), along with a variable power supply circuit 41 coupled to the resistor 14. The variable power supply circuit 41 comprises a follower circuit 42 coupled to the voltage supply side terminal of the resistor 14 and a power supply circuit 43. The follower circuit 42 comprises an operational amplifier 44 and a transistor 45. As shown, the output of the operational amplifier 44 is coupled to the base terminal of transistor 45, and one input to the operational amplifier 44 is coupled to the emitter terminal of the transistor 45. The other input to the operational amplifier 44 is voltage control signal, Vctrl1. The collector terminal of the transistor 45 is coupled to the output of the power supply circuit 43, which is operative for generating a supply voltage.

As shown, the power supply circuit 43 comprises a linear regulator 46, and receives a positive supply voltage as an input. The power supply circuit 43 functions to produce a stable output voltage, the level of which is determined in-part by biasing resistors 47, which operate to determine the set point of the linear regulator 46. As stated, the output of the linear regulator 46 is coupled to the collector of the transistor 45 of the follower circuit 42.

Fig. 5(b) illustrates the basic operation of the embodiment of the present invention set forth in Fig. 5 (a). To summarize, the follower circuit 42 operates such that the voltage present at the emitter of the transistor 45 tracks the changes in the input signal, Vctrl 1. More specifically, in one embodiment, the operational amplifier 44 functions essentially as an unity amplifier, wherein the output of the operational amplifier 44 substantially equals the input signal Vctrl 1. As the output of the operational amplifier 44 is coupled to the base terminal of transistor 45, the value of Vctrl 1 is controlled such that transistor 45 is always on. Accordingly, the voltage level of Vpos is equal to Vctrl 1 minus Vbe of transistor 45, which is essentially fixed. Thus, Vpos essentially tracks Vctrl 1. As a result, if it is desired to raise the voltage level of Vpos, this is accomplished by raising the voltage level of Vctrl 1, and if it is desired to lower the voltage level of Vpos, this is accomplished by lowering the voltage level of Vctrl 1. Thus, the follower circuit 42 in conjunction with the linear regulator 43 allow the voltage level, Vpos, supplied to the load resistor 14 of the amplifier 10 to be varied by simply varying the voltage level of control signal Vctrl 1.

Accordingly, referring again to Fig. 5(b), it can be readily shown that in the event it is desirable to lower the power output of the amplifier 10, the control signal, Vctrl1, would be decreased and the control voltage signal, Vctrl 2 would be increased. It is noted that control voltage, Vctrl 2 of Figs. 5(a) and 5(b) corresponds to the control signal, Vctrl I, illustrated in Figs. 3(a) - 4(b). As a result, the drain supply voltage, Vpos, the drain voltage, Vd and the drain current, Id, are reduced, and Vgs remains essentially constant, as shown in Fig. 5(b). Thus, there is a reduction on the output power of the amplifier 10. Alternatively, if it is desired to raise the output power of the amplifier 10, the voltage level of control signal Vctrl 1 is increased and the voltage level of control signal Vctrl 2 is decreased, which causes a corresponding increase in the drain supply voltage, Vpos, the drain voltage, Vd and the drain current, Id, and therefore an increase in the output power of the amplifier 10. Once again, Vgs remains substantially constant.

Fig. 6(a) illustrates a variation of the device illustrated in Fig. 5(a). Specifically, as shown in Fig. 6(a), in this embodiment the follower circuit 42 is omitted and control signal Vctrl 1 is directly utilized to vary the drain supply voltage, Vpos, generated by the power supply circuit 52. As shown, the power supply circuit 52 of the current embodiment is essentially the same as the power supply circuit 43 of the third embodiment, with the exception that an additional resistor 51 is coupled in parallel with the bias resistor 47. The embodiment of Fig. 6 (a) provides an advantage over the embodiment Illustrated in Fig. 5(a) in that it requires a lower component count and is therefore less costly to implement.

Referring again to Fig. 6(a), as stated control signal, Vctrl 1, is coupled to the bias resistors 47 of the linear regulator 46 via resistor 51. Accordingly, by raising or lowering the voltage of Vctrl 1, it is possible to adjust the bias set point of the linear regulator 46, and thereby adjust the output voltage of the linear regulator, which results in the adjustment of the drain supply voltage, Vpos. The output voltage of the regulator is set by the input at the feedback pin and governed by the following equation:

$$V_{pos} = 1.24(1 + \frac{R_A}{R_B})$$

where referring to Fig 6(a): $R_A = R1$, and
$$R_B = R2 \| R3$$
Vctrl1 is a voltage proportional to Vctrl2 and which starts at 0V. Vctrl1 is set at R3. As Vctrl1 is increased from 0V, the affect is to make the value of R3 increase (it is noted that the actual value of R3 does not change, only the current being drawn through R3 is reduced, however to the feedback pin of the regulator the affect is the same as R3 increasing). In the equation above, if R3 increases this increases the parallel combination Rb. Therefore Vout is reduced as Rb increases. The opposite is also true as Vctrl1 falls Rb decreases, Vout Increases to a maximum when Vctrl1=0V.

Thus, referring to Fig 6(b), in a manner similar to the embodiment illustrated in Fig. 5(a), if it is desirable to lower the power output of the amplifier 10, the control voltage signal, Vctrl1, would be increased and the control voltage, Vctrl 2, would be increased. The increase in Vctrl 1 results in a decrease in the output voltage of the linear regulator 46. As a result, the drain supply voltage, Vpos, the drain voltage, Vd and the drain current, Id, are reduced, and Vgs remains essentially constant, as shown in Fig. 6(b). Thus, there is a reduction on the output power of the amplifier 10. Alternatively, if it is desired to raise the output power of the amplifier 10, the voltage level of Vctrl 1 is decreased and the voltage level of Vctrl 2 is decreased, which causes a corresponding increase in the output voltage level of the linear regulator 46. As a result, the drain supply voltage, Vpos, the drain voltage, Vd and the drain current, Id, are increased, and therefore the output power level of the amplifier 10 is increased. Once again, Vgs remains substantially constant.

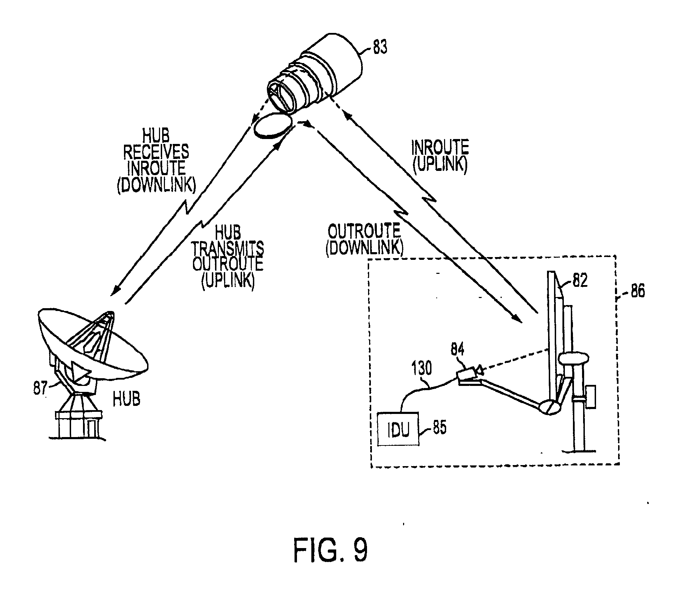

As stated above, one of the intended uses of the present invention is to provide variable and continuous control of the RF output power amplifier contained in an ODU of a VSAT system. Fig. 9 depicts a block diagram of an exemplary VSAT that could utilize the present invention. Referring to Fig. 9, a typical VSAT system comprises a remote ground terminal 86 comprising a small aperture antenna 82 for receiving (i.e., downlink) and transmitting (i.e., uplink) signals to a satellite 83, the outdoor unit 84 typically mounted proximate the antenna 82 which comprises a transmitter module (including the RF output power amplifier) for amplifying a modulated data signal which is coupled to the antenna 82, and the indoor unit 85 which operates as an interface between a specific user's communication equipment and the outdoor unit 84. The IDU is coupled to the ODU via an interfacility link 130. The remote ground terminal functions to transmit and receive data from a central hub 87 via the satellite 83.

In accordance with the present invention, the components illustrated in Figs. 3(a), 4(a), 5(a) and 6(a) would typically be located in the ODU 84 of the system, as the amplifier 10 under control would correspond to the RF power amplifier utilized to amplify the signal to be transmitted via the antenna 82. However, as stated, both control signals, Vctrl1 and Vctrl2, would be generated under control of components in the IDU 85 and the control signals would be coupled to the ODU 84 via the interfacility link 130. This allows the user to actively and continuously control the output power level of the amplifier without having to physically access the ODU 84.

It is further noted that in a typical application, a VSAT system utilizing the present invention is initially calibrated to determine the necessary current level corresponding to desired maximum power level to be generated by the amplifier during operation. Once this maximum current (voltage) level is determined, it can be readily determined how to reduce the current (voltage) supplied to the amplifier to obtain the desired output power level. Again, this is due to the fact that the amplifier of the present invention is operating in the saturated mode, which results in proportional variations between input current (voltage) and output power,

As described above, the method and apparatus for providing active control of an amplifier in accordance with the present invention provides important advantages over the prior art. Most importantly, this method allows a low cost simple analog circuit approach to be used in the ODU rather than a complicated and more expensive digital solution using a microprocessor, a Universal Asynchronous Receive Transmit (UART) block and memory.

In addition, by allowing the output of the amplifier to be continuously varied, the overall system operates with increased efficiency, as the amplifier can be continuously adjusted to operate slightly above the minimal requirement necessary for proper operation. Also, the method allows for open loop or closed loop operation. Further, the RF amplifier follows a predictable relationship between DC bias and RF output power, giving the benefit of requiring no calibration during or after manufacture and allowing open loop operation.

Yet another advantage of the present invention is that it allows the gain of the amplifier to be easily controlled by varying a control signal generated within the IDU, thereby negating the need to access the ODU.

In addition, the present Invention allows the output power level of the amplifier to be set to any level between 0 and a predetermined maximum output level quickly and easily, by simply varying the voltage levels of the control signals.

Numerous variations of the various embodiments of the present invention set forth herein are also possible. For example, the present invention can be utilized to control the output power level of essentially any type of amplifier, including but not limited to, RF amplifiers, optical amplifiers, microwave amplifier, etc.

Of course, it should be understood that a wide range of other changes and modifications can be made to the preferred embodiment described above. It is therefore intended that the foregoing detailed description be regarded as illustrative rather than limiting and that it be understood that it is the following claims including all equivalents, which are intended to define the scope of the invention.

**Claims**

1. A VSAT system having an indoor unit and an outdoor unit,
said outdoor unit comprising:
an amplifier operating in a saturated mode, said amplifier having an output power level which is variable by adjusting an operating bias of said amplifier, and
an operating bias variation circuit coupled to said amplifier operative for varying the operating bias of said amplifier,
said indoor unit comprising:

a signal generating circuit for generating a modulated power control signal, said modulated power control signal being coupled to said outdoor unit via an interfacility link,

wherein said modulated power control signal is coupled to said operating bias variation circuit so as to control said operating bias variation circuit so as to allow adjustment of the output power level of said amplifier.

2. The VSAT system of claim 1, wherein said modulated power control signal is a pulse-width modulated signal.

3. The VSAT system of claim 1, wherein said modulated power control signal is a pulse-density modulated signal.

4. The VSAT system of claim 1, further comprising a detection circuit in the outdoor unit for receiving and demodulating said modulated power control signal, and for generating a control signal having a voltage level which varies proportionally with a modulation level of said modulated power control signal.

5. The VSAT system of claim 4, wherein the modulation level of said modulated power control signal is variable by varying the duty cycle of said modulated power control signal.

6. The VSAT system of claim 1, wherein said output power level of said amplifier is variable in a linear manner.

7. The VSAT system of claim 6, wherein the said output power level of said ampllfler is varlable in an analog manner between 0 volts and a maximum voltage defined by a fixed power supply coupled to said amplifier.

8. The VSAT system of claim 7, wherein said amplifier comprises a MMIC amplifier.

9. The VSAT system of claim 1, where said operating bias variation circuit comprises:

a comparator having a first input coupled to an output terminal of said amplifier, and a second input coupled to said control signal, said comparator having an output terminal coupled to an input terminal of said amplifier,
said amplifier and comparator forming a feedback loop which operates to equalize the voltage level of an output signal present at said output terminal of said amplifier to the voltage level of said control signal, said output signal present at said output terminal of said amplifier corresponding to said variable output power signal.

10. The VSAT system of claim 3, wherein said signal generating circuit includes a sigma-delta modulator.

11. A VSAT system having an indoor unit, and an outdoor unit,
said indoor unit comprising:

> a signal generating circuit for generating a modulated power control signal, said modulated power control signal comprising information regarding a desired power output level, said outdoor unit comprising:

> > an amplifier operating in a saturation mode,
> > a demodulator circuit for receiving said modulated power control signal, said demodulator operative for producing a control signal having a voltage level corresponding to the modulated power control signal;
> > biasing circuitry coupled to said amplifier and operative for adjusting an output power level of said amplifier in accordance with the voltage level of said control signal by varying a operating bias of said amplifier.

12. The VSAT system of claim 11, further comprising:

> a comparator having a first input coupled to an output terminal of said amplifier, and a second input coupled to said demodulator circuit so as to receive said control signal, said comparator having an output terminal coupled to an input terminal of said amplifier,
> said amplifier and comparator forming a feedback loop which operates to equalize the voltage level of an output signal present at said output terminal of said amplifier to the voltage level of said control signal.

13. The VSAT system of claim 11, wherein said modulated power control signal is generated utilizing pulse-width modulation techniques.

14. The VSAT system of claim 13, wherein said voltage level of said control signal varies in accordance with variations in the duty cycle of said modulated power control signal.

15. The VSAT system of claim 11, wherein said modulated power control signal is generated utilizing pulse-density modulation techniques.

16. The VSAT system of claim 11, wherein the voltage level of control signal is variable in a linear manner.

17. The VSAT system of claim 11, wherein the voltage level of said output power signal is variable in an analog manner between 0 volts and a maximum voltage defined by a fixed power supply coupled to said amplifier.

18. The VSAT system of claim 11, wherein said amplifier comprises a FET.

19. A method for providing variable control of an output amplifier in a VSAT system having an indoor unit and an outdoor unit, said method comprising the steps of:

> generating a modulated power control signal in said indoor unit, said modulated power control signal comprising information regarding a desired power output level of said amplifier,
> coupling said modulated power control signal to said outdoor unit;
> demodulating said power control signal utilizing a demodulating circuit contained in the outdoor unit so as to produce a control signal having a voltage level corresponding to the modulated power control signal;
> adjusting an output power level of said output amplifier in accordance with the voltage level of said control signal.

20. The method of claim 19, further comprises the step of forming a feedback loop which operates to equalize the voltage level of an output signal present at said output terminal of said amplifier to the voltage level of said control signal.

21. The method of claim 19, wherein said modulated power control signal is generated utilizing pulse-width modulation techniques.

22. The method of claim 21, wherein said voltage level of said control signal varies in accordance with variations in the duty cycle of said modulated power control signal.

23. The method of claim 19, wherein said modulated power control signal is generated utilizing pulse-density modulation techniques.

24. The method of claim 23, wherein said voltage level of said control signal varies in accordance with variations in the pulse density of said modulated power control signal.

25. The method of claim 19, wherein the voltage level of control signal is variable in a linear manner.

26. The method of claim 19, wherein said amplifier is operating in a saturation mode.

27. The VSAT system of claim 4, wherein the modulation level of said modulated power control signal is variable by varying the pulse density of said modulated power control signal.

28. The VSAT system of claim 15, wherein said voltage level of said control signal varies in accordance with variations in the pulse density of said modulated power control signal.

V NEGATIVE SUPPLY, FIXED

V POSITIVE SUPPLY, FIXED

—105

—102

—101
RDRAIN

IDRAIN

—103

104

100

—106

FIG. 1A

114

115

AMPLIFIER BIAS CIRCUITRY

DIGITAL CONTROL CIRCUITRY

RF
DETECTOR 112

IDRAIN
103

104

111 RF COUPLER

100

106

FIG. 1B

201

SIGNAL
GENERATING
CIRCUIT

IDU

85

PWM/PDM SIGNAL
FROM INDOOR UNIT

130

84

ODU

202

DETECTOR
AND GAIN

203

FILTER AND
BUFFERING

CONTROL VOLTAGE TO
AMPLIFIER BIAS CIRCUITRY

Vctrl

FIG. 2A

FIG. 2B

FIG. 3A

FIG. 3B

FIG. 4A

FIG. 4B

FIG. 5A

Vctrl 1 ——————

Vctrl 2 ——————

Vpos ——————

Vds ——————

Vgs NEAR
CONSTANT          ↕ DECREASING Vgd

Ids ——————

## FIG. 5B

Vctrl 1 ——————

Vctrl 2 ——————

Vpos ——————

Vds ——————

Vgs NEAR
CONSTANT          ↕

Ids ——————

## FIG. 6B

FIG. 6A

FIG. 7

FIG. 8

FIG. 9